(19) Europäisches Patentamt
European Patent Office
Office européen des brevets

(11) **EP 4 600 384 A1**

(12) **EUROPEAN PATENT APPLICATION**
published in accordance with Art. 153(4) EPC

(43) Date of publication:
**13.08.2025 Bulletin 2025/33**

(21) Application number: 23874913.9

(22) Date of filing: **04.10.2023**

(51) International Patent Classification (IPC):
*C21D 8/12* (2006.01)        *C22C 38/00* (2006.01)
*C22C 38/06* (2006.01)        *B23K 26/364* (2014.01)
*H01F 1/147* (2006.01)

(52) Cooperative Patent Classification (CPC):
**B23K 26/364; C21D 8/12; C22C 38/00;
C22C 38/06; H01F 1/147**

(86) International application number:
**PCT/JP2023/036261**

(87) International publication number:
**WO 2024/075788 (11.04.2024 Gazette 2024/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.10.2022 JP 2022160364**

(71) Applicant: NIPPON STEEL CORPORATION
**Chiyoda-ku
Tokyo 100-8071 (JP)**

(72) Inventors:
• **YASUDA, Masato**
  **Tokyo 100-8071 (JP)**
• **HAMAMURA, Hideyuki**
  **Tokyo 100-8071 (JP)**
• **SUGIYAMA, Kimihiko**
  **Tokyo 100-8071 (JP)**
• **MORISHIGE, Nobusato**
  **Tokyo 100-8071 (JP)**

(74) Representative: **Vossius & Partner
Patentanwälte Rechtsanwälte mbB
Siebertstrasse 3
81675 München (DE)**

(54) **GRAIN-ORIENTED ELECTROMAGNETIC STEEL SHEET AND METHOD FOR MANUFACTURING SAME**

(57)     Grain-oriented electrical steel sheet keeping down a drop in productivity while improved in core ross in control of magnetic domains for forming laser grooves, that is, grain-oriented electrical steel sheet having a plurality of grooves at its surface, having projecting parts at groove side parts adjoining the grooves at the surface of the steel sheet, having a crystal orientation of at least one crystal grain present inside the projecting parts different by 5° or more from the Goss orientation of the crystal orientations of crystal grains other than near the projecting parts of the steel sheet, whereby the core ross of the electrical steel sheet is improved and the projecting part removing step becomes unnecessary.

Fig. 4

EP 4 600 384 A1

## Description

FIELD

The present invention relates to grain-oriented electrical steel sheet.

BACKGROUND

Grain-oriented electrical steel sheet is a steel sheet controlled in crystal orientation by a combination of cold rolling and annealing so that the easy magnetization axes of crystal grains and the rolling direction match.

As art for reducing eddy current loss, one type of core ross, of grain-oriented electrical steel sheet, it is known to form an insulating coating on the surface of a base steel sheet controlled in crystal orientation. The insulating coating performs a role of not only providing electrical insulation, but also tension and rust resistance etc. to the base steel sheet.

Further, as another method for reducing eddy current loss, the method of control of magnetic domains forming distorted regions or grooves in a direction crossing the rolling direction at a predetermined pitch along the rolling direction to narrow the width of the 180° magnetic domains (refining the 180° magnetic domains) is known. Magnetic domain control methods are classified into methods imparting distortion to the base steel sheet of the grain-oriented electrical steel sheet and methods forming grooves in the surface of a base steel sheet with a coating applying tension at the base steel sheet.

By using grain-oriented electrical steel sheet controlled in magnetic domains by grooves, even if producing iron cores (wound cores) of transformers and applying straightening annealing, the grooves will not disappear, so the effect of magnetic domain refining can be maintained. For this reason, the magnetic domain control method using formation of grooves as the method for reducing eddy current loss is sometimes employed for wound cores.

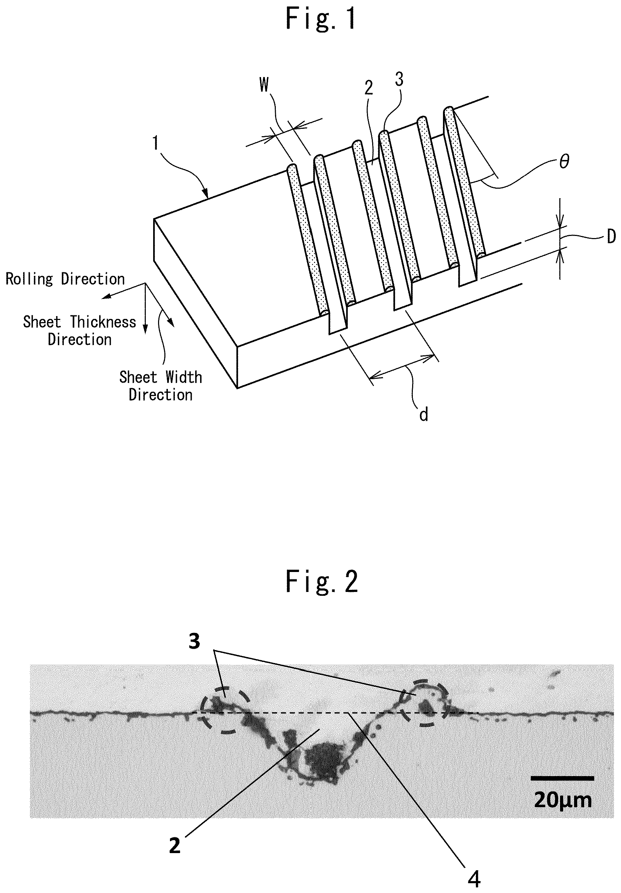

FIG. 1 is a view showing an outline of electrical steel sheet formed with grooves. In FIG. 1, the state is shown where the surface of the base steel sheet 1 is formed with a plurality of grooves 2 at a pitch in the rolling direction of the base steel sheet 1. In FIG. 1, the notation θ shows the angle formed by the direction perpendicular to the rolling direction of the base steel sheet 1 and sheet thickness direction (sheet width direction) and the longitudinal direction of the grooves 2. The notation W shows the width of the grooves 2, the notation D shows the depth of the grooves 2, and the notation P shows the pitch of grooves 2 adjoining each other in the rolling direction.

Various methods for forming grooves in electrical steel sheet have been proposed.

For example, PTL 1 discloses an electrolytic etching method of using electrolytic etching to form grooves in the steel sheet surface of grain-oriented electrical steel sheet.

PTL 2 discloses a gear press method of mechanically pressing a gear against the steel sheet surface of grain-oriented electrical steel sheet to thereby form grooves in the steel sheet surface.

However, the method using electrolytic etching has the problem that masking, etching, and mask removing steps are required and therefore the process becomes more complicated compared with the mechanical method. The gear press method has the issue of the gear teeth becoming worn in a short period of time due to the high hardness of electrical steel sheet. Further, from the viewpoint of high speed processing, it is difficult to realize a line speed of 100 mpm or more like demanded in general ferrous metal manufacturing processes.

Further, PTL 3 discloses a lasering method of using lasering to melt and evaporate lasered parts of the steel sheet surface of grain-oriented electrical steel sheet. The lasering method has no problem of wear of gear teeth or a complicated process and also enables high speed processing. However, with groove formation by lasering, the spatter generated when forming the grooves causes sputtered projections to form at the groove side parts. These sputtered projections cause the magnetic properties to deteriorate, so a step of removal of the sputtered projections becomes necessary. The drop in productivity was a problem.

Furthermore, PTL 5 proposes to keep down the size of projections and maintain good core ross by making the metalostructure of projections match the Goss orientation since sputtered projections formed by formation of grooves by lasering obstruct close contact of grain-oriented electrical steel sheets adjoining each other inside a stacked iron core and cause an increase in noise.

[CITATIONS LIST]

[PATENT LITERATURE]

[PTL 1] Japanese Examined Patent Publication No. 62-54873
[PTL 2] Japanese Examined Patent Publication No. 62-53579
[PTL 3] Japanese Unexamined Patent Publication No. 2003-129135

[PTL 4] WO2011/007771
[PTL 5] WO2017/171013

SUMMARY

[TECHNICAL PROBLEM]

The present invention was developed in consideration of the above problem and has as its goal to keep down the drop in productivity while improving the core ross in control of magnetic domains for forming laser grooves (grooves formed by lasering) and has as its object the provision of such grain-oriented electrical steel sheet.

[SOLUTION TO PROBLEM]

The inventors engaged in repeated intensive studies for achievement of the above goal. In their repeated studies of the lasering conditions at the time of formation of laser grooves, they discovered conditions for eliminating the detrimental effects on core ross by controlling the shapes of sputtered projections (projecting parts) formed at groove side parts adjoining grooves on a steel sheet surface due to spatter occurring at the time of laser groove formation. The inventors proceeded with further studies whereupon it was discovered that the core ross is improved if there are crystal grains present in the projecting parts with crystal orientations different by 5° or more from the base steel sheet. This is a completely new finding not seen in PTL 3 or 5 relating to sputtered projections. The present invention was made based on these new findings. The gist of the present invention is as follows:

[1] The grain-oriented electrical steel sheet according to one aspect of the present invention is a grain-oriented electrical steel sheet having a plurality of grooves at its surface, which grain-oriented electrical steel sheet having projecting parts at groove side parts adjoining the grooves at the surface of the steel sheet, the crystal orientation of at least one crystal grain present inside the projecting parts different by 5° or more from the crystal orientations of crystal grains present at parts other than the projecting parts of the steel sheet.
[2] The grain-oriented electrical steel sheet according to another aspect of the present invention is the grain-oriented electrical steel sheet according to [1], wherein an average height of the projecting parts is 2.5 $\mu$m or more and 10.0 $\mu$m or less.
[3] The grain-oriented electrical steel sheet according to another aspect of the present invention is the grain-oriented electrical steel sheet according to [1] or [2], wherein in the grain-oriented electrical steel sheet, an angle θ formed by a direction perpendicular to a rolling direction and sheet thickness direction and a longitudinal direction of the grooves is 40° or less, a width W of the grooves is 20 $\mu$m or more and 300 $\mu$m or less, a depth D of the grooves is 10 $\mu$m or more and 40 $\mu$m or less, and a pitch P of the grooves in the rolling direction is 1 mm or more and 30 mm or less.
[4] A method of production of the grain-oriented electrical steel sheet according to any one of [1] to [3], the method of production of the grain-oriented electrical steel sheet including a groove forming step of lasering a surface of the steel sheet to form grooves, as a condition of lasering, a focused spot diameter dL of the laser beam in the rolling direction and a focused spot diameter dC in a sheet width direction satisfying formula (1):

$$1.0 \leq dL/dC \ldots \text{formula (1)}$$

[ADVANTAGEOUS EFFECTS OF INVENTION]

According to the present invention, even if forming laser grooves at a steel sheet surface, a projection removing step can be eliminated and grain-oriented electrical steel sheet excellent in core ross can be obtained without causing a drop in productivity.

BRIEF DESCRIPTION OF DRAWINGS

FIG. 1 is a view showing an outline of an electrical steel sheet on which grooves are formed.
FIG. 2 is an optical micrograph of a cross-section of projecting parts.
FIG. 3 is an SEM photograph obtained by an SEM-EBSD capturing a cross-section of a projecting part at a slant.
FIG. 4 is an ND-IPF (inverse pole figure) map of the field of FIG. 3.

DESCRIPTION OF EMBODIMENTS

The inventors engaged in repeated studies for obtaining the effect of magnetic domain refining to the maximum extent and raising productivity whereupon they discovered that if sputtered projections present at the side parts of laser grooves at the steel sheet surface (groove side parts) satisfy a specific condition, no detrimental effect is exerted on the magnetic properties. Hereafter, the present invention will be explained with reference to grain-oriented electrical steel sheet according to one embodiment of the present invention (hereafter, abbreviated as the "present electrical steel sheet") as an example.

The present electrical steel sheet, as shown in FIG. 1, is electrical steel sheet on the surface of which a plurality of grooves are arranged substantially in parallel. The steel sheet surface may or may not have a glass coating. Further, the surface-most part of the steel sheet may or may not have a tension coating (insulating coating). FIG. 1 is a conceptual view of the present electrical steel sheet not having a glass coating or a tension coating. The "steel sheet surface", unless particularly indicated otherwise, will indicate the surface including a glass coating or tension coating if having these coatings on the steel sheet.

<Projecting Parts>

The grooves of the steel sheet surface are formed on the steel sheet surface with projecting parts at the groove side parts due to the spatter (flying drops of molten metal) and flow of molten metal generated at the time of formation of laser grooves by lasering. As shown in FIG. 1, the projecting parts 3 are formed on the surface of the present electrical steel sheet 1 along the grooves 2. In some cases, sometimes other projecting parts are formed on the steel sheet surface between the projecting parts 3 and the projecting parts 3 of the adjoining grooves (that is, on the steel sheet surface sandwiched between projecting parts 3 of the groove side parts), but the "projecting parts" referred to in the present electrical steel sheet indicate the projecting parts closest to the grooves, that is, the projecting parts formed at the groove side parts.

FIG. 2 to FIG. 4 are views showing grooves of the present electrical steel sheet by crosssections vertical to the longitudinal directions of the grooves. The broken line in FIG. 2 shows an imaginary line of the steel sheet surface (imaginary line of surface) and is a line where it is assumed there was the steel sheet surface before the formation of the laser grooves. As will be understood from FIG. 2, if forming laser grooves, projecting parts are formed at parts of the steel sheet surface adjoining the laser grooves (groove side parts). The "projecting parts" indicate parts positioned at the top part from the imaginary surface line (top part in steel sheet surface direction).

<Fine Crystal Grains in Projecting Parts>

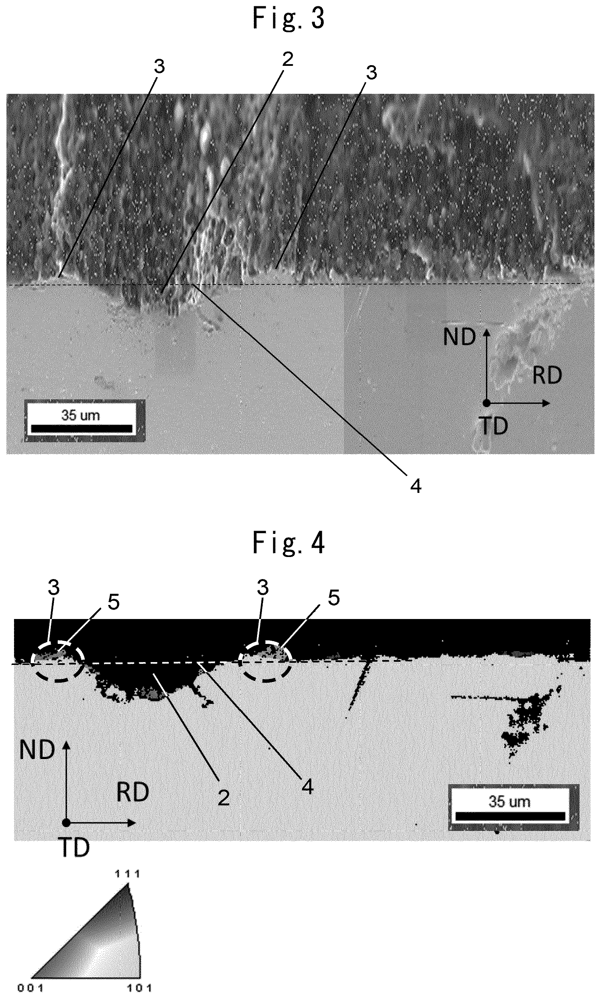

In the present electrical steel sheet, control is performed so that there are projecting parts at the side parts of the steel sheet surface at the grooves formed on the base steel sheet and that, in the cross-section vertical to the groove longitudinal direction, there is at least one fine crystal grain in the projecting parts different by 5° or more from the crystal orientation of the crystal grains of the base steel sheet (parts other than projecting parts not affected by lasering). Specifically, as shown in FIG. 2 and FIG. 3, in the cross-section vertical to the groove longitudinal direction, it is sufficient that at least one of the crystal grains present in the projecting parts be different by 5° or more from the crystal orientation of the base steel sheet defined as the Goss orientation {110}<001> (hereafter, sometimes called the "base Goss orientation"). Hereafter, crystal grains present in the projecting parts and different in crystal orientation from the base steel sheet will be referred to as the "fine crystal grains".

The fine crystal grains can be obtained by lasering the steel sheet after cold rolling, after decarburization annealing, or after finish annealing or the steel sheet after further imparting a tension coating. If lasering after cold rolling, recrystallized grains are formed inside the projections after the decarburization annealing. Orientations different by 5° or more from the base Goss orientation remain without being consumed by the Goss orientations of the base material due to the secondary recrystallization. If lasering after decarburization annealing, recrystallized grains are formed inside the projections at the finish annealing and orientations different by 5° or more from the base Goss orientation remain without being consumed by the Goss orientations of the base material due the secondary recrystallization. If lasering steel sheet after finish annealing or given a tension coating, recrystallized grains different by 5° or more from the orientation of the base steel sheet which had become the Goss orientation due to secondary recrystallization are formed inside the projections at the following coating baking or recoat baking.

The reason why fine grains of the projecting parts reduce the core ross is believed to be as follows. Subdivision of the magnetic domains at the grain-oriented electrical steel is realized due to the magnetostatic energy becoming higher due to the magnetic poles formed at the steel sheet surface, 180° domain walls being newly formed to deal with this, and the magnetic domain widths becoming narrower. If the magnetic domain widths become narrower, the distance of movement of the domain walls when the steel sheet is magnetized becomes shorter and the energy loss at the time of movement of the domain walls is reduced, that is, the core ross is reduced. For this reason, the fine crystal grains become starting points for formation of magnetic poles, subdivision of the 180° magnetic domains is promoted, and reduction of core ross results.

If the difference in orientations of the fine crystal grains of the projecting parts and the crystal grains of the base steel sheet is small, the grains do not become starting points for formation of magnetic poles, so the difference in orientations of the fine crystal grains of the projecting parts and the crystal grains of the base steel sheet is made 5° or more. The difference in crystal orientations is preferably 6° or more, 7° or more, 8° or more, 9° or more, 10° or more, 11° or more, 12° or more, 13° or more, 14° or more, 15° or more, 16° or more, 17° or more, 18° or more, 19° or more, or 20° or more. Note that, the difference in crystal orientations need only be one where starting points of formation of magnetic poles are formed, so there is no upper limit to the difference in crystal orientations between the fine crystal grains and base steel sheet.

The fine crystal grains at the inside of the projections can be examined by electrolytically polishing a cross-section of a groove obtained by cutting at a cross-section vertical to the longitudinal direction, acquiring an inverse pole figure (IPF) map (crystal orientation map) by SEM-EBSD (electron backscattered diffraction pattern), and indexing and measuring. FIG. 4 shows an example of an IPF map of SEM-EBSD of projecting parts. FIG. 3 shows an SEM-EBSD image of the same field as FIG. 4. Note that, if having a glass coating, the glass coating itself is present in the base material and is difficult to differentiate at the IPF map by EBSD, but by combining this with an SEM-EBSD image, it is possible to differentiate it from steel sheet including a glass coating and projecting parts. As explained above, using an IPF map of EBSD, it is possible to identify fine crystal grains in the projecting parts and furthermore possible to confirm the crystal orientation of the fine crystal grains and base Goss orientation.

If one or more fine crystal grains are present at one projecting part at the cross-section perpendicular to the groove longitudinal direction, magnetic poles are formed and an effect of magnetic domain refining is obtained. The upper limit of the number of fine crystal grains in one projecting part is not particularly prescribed. For example, it is sufficient to select at lease one groove and examine the cross-section at the time of cutting the groove by a cross-section vertical to the longitudinal direction so as to observe the fine crystal grains. That is, it is sufficient that one or more fine crystal grains can be observed at one projecting part. No upper limit is particularly prescribed, but if too numerous, the projection height becomes higher, so the number may be made 10 or less per one projecting part.

If the size of the fine crystal grains becomes larger, there is a possibility of the magnetic properties deteriorating, so the size of the fine crystal grains may be 15.0 $\mu$m or less by areaequivalent circle equivalent diameter. Preferably, it is 14.0 $\mu$m or less, 13.0 $\mu$m or less, 12.0 $\mu$m or less, 11.0 $\mu$m or less, or 10.0 $\mu$m or less. The lower limit of the size of the fine crystal grains is not particularly set, but may be made 1.0 $\mu$m or more if considered from the spatial resolution of EBSD.

The shape of the fine crystal grains is not particularly limited, but if it becomes a flat shape extremely long in the rolling direction or sheet thickness direction, sometimes the effect of reduction of the core ross becomes smaller. For this reason, the shape ratio A of the ratio of the length of the fine crystal grains in the rolling direction and the length in the sheet thickness direction may be made 0.2 or more and 5 or less. Here, the shape ratio A of the fine crystal grains is the ratio $L_{RD}/L_{ND}$ of the maximum length $L_{RD}$ of the fine crystal grains in the rolling direction and the maximum length $L_{ND}$ in the sheet thickness direction. The lower limit of the shape ratio A of the fine crystal grains is preferably 0.25 or more, 0.3 or more, 0.4 or more, or 0.5 or more. The shape ratio A may be 4 or less, 3.5 or less, 3 or less, 2.5 or less, 2 or less, or 1.5 or less. From the viewpoint of the starting points of formation of magnetic poles for reduction of the core ross, this is preferable since it is believed that the smaller the shape ratio from 1.0 (less than 1.0), that is, the narrower in the sheet thickness direction, the more the flow of magnetic flux in the rolling direction is locally obstructed and the easier it becomes to form starting points of formation of magnetic poles.

<Heights of Projecting Parts>

If there are fine crystal grains, magnetic domain refining is promoted, so the height of the projecting parts is not particularly limited. However, if the height of the projecting parts is too low, the fine crystal grains become smaller and will not become starting points for formation of magnetic poles and there will be no effect of control of magnetic domains, so the projection height may be made 2.5 $\mu$m or more, preferably 3.0 $\mu$m or more, 4.0 $\mu$m or more, or 5.0 $\mu$m or more. On the other hand, if the height of the projecting parts is too high, the fine crystal grains become larger and lead to a drop in the magnetic flux density, so the projection height may be made 10.0 $\mu$m or less, preferably 9.0 $\mu$m or less.

The height of the projecting parts can be measured in the following way by, for example, a 3D microscope or 3D roughness meter or other noncontact type or contact type roughness meter (hereafter, these being referred to all together as a "roughness meter"). First, the top parts of projecting parts of the steel sheet surface are measured for roughness over a length of 150 $\mu$m in parallel with a groove and the maximum height of the projecting parts is derived. Next, leaving the reference height as it is, the steel sheet surface between that groove and the adjoining groove (the vicinity of the center between one groove and another groove is preferable) was measured for roughness over a length of 150 $\mu$m parallel to that groove and the average height of the steel sheet surface between the grooves was measured. The difference between the maximum height of the projecting parts observed and the groove is made the "projection height".

Further, a roughness meter is made to scan the steel sheet surface along a line vertical to the grooves so as to traverse the projecting parts and measure the roughness distribution of the steel sheet surface and to find the cross-sectional profile. At this time, the height of the highest point of the projecting parts at a position between adjoining grooves may be made the projection height. Alternatively, an imaginary surface line may be drawn from the obtained cross-sectional profile and the distance between the highest point of the projecting parts and the imaginary surface line may be made the projection height.

In this way, the projection heights of any 10 points of the steel sheet were measured and the obtained projection heights were averaged. The arithmetic average was defined as the average height of the projecting parts.

The average height of the projecting parts may also be measured by other than a roughness meter. For example, a cross-section of a groove vertical to its longitudinal direction (for example, a cross-section such as FIG. 2) may also be examined by an optical microscope, the heights of projecting parts measured from an imaginary surface line, and the highest height made the projection height. This was measured at any 10 points on the steel sheet. The projection heights at the measurement points were averaged. The arithmetic average was defined as the average height of the projecting parts.

The average height of the projecting parts may be measured by one of the methods among the above methods. If measured by several methods, the average heights of the projecting parts obtained by the respective methods may be further averaged and the value may be used as the average height of the projecting parts.

The present electrical steel sheet, as shown in FIG. 1, has a plurality of grooves on the surface of the steel sheet formed substantially in parallel so as to adjoin each other in the rolling direction of the steel sheets. The direction (angle $\theta$) of the grooves and the width W, depth D, and pitch P of the grooves are determined in consideration of the core ross in the same way as usual grain-oriented electrical steel sheet.

<Angle $\theta$ Formed by Longitudinal Direction of Base Steel Sheet and Longitudinal Direction of Grooves>

If the angle $\theta$ formed by the direction perpendicular to the rolling direction and sheet thickness direction of the base steel sheet (sheet width direction) and the longitudinal direction of a groove is too large, there is no effect of control of the magnetic domains and the effect of improvement of the core ross can no longer be obtained, so this is made 40° or less. The angle $\theta$ is preferably small and may be made 35° or less, 30° or less, 25° or less, 20° or less, 15° or less, 10° or less, 8° or less, 6° or less, or 5° or less. The lower limit of the angle $\theta$ is 0°, that is, when the longitudinal direction of the groove is parallel to the sheet width direction. Note that the direction of the angle $\theta$ is not in question. It indicates the acute angle side angle in the angle formed by the longitudinal direction of a groove and a sheet width direction. The surface of the base steel sheet is provided with a plurality of grooves arranged substantially in parallel, but it is sufficient that the angle $\theta$ for each groove be the above such range.

<Width W of Groove>

The groove width W indicates the width of a groove at the base steel sheet surface at the cross-section of the groove at the surface vertical to the longitudinal direction of the groove (groove cross-section). The groove width W is made 20 $\mu$m or more since if too narrow, no starting points of formation of magnetic poles will be formed, there will be no effect of control of magnetic domains, and excellent core ross will not be obtained. On the other hand, it is made 300 $\mu$m or less since if too broad, no starting points of formation of magnetic poles will be formed, there will be no effect of control of magnetic domains, only the magnetic flux density will end up remarkably falling, and excellent core ross will not be obtained. Therefore, the groove width W may be made 20 $\mu$m or more and 300 $\mu$m or less. The lower limit of the groove width W is preferably 25 $\mu$m and 30 $\mu$m. The upper limit of the groove width W is preferably 250 $\mu$m, 200 $\mu$m, 150 $\mu$m, 100 $\mu$m, or 80 $\mu$m.

<Depth D of Groove>

If the groove depth D is too shallow, no starting points of formation of magnetic poles will be formed, there will be no effect of control of magnetic domains, and excellent core ross will not be obtained, so it may be 10 $\mu$m or more. On the other hand, if over 40 $\mu$m and too deep, the effect of control of magnetic domain ends up reaching saturation and only the magnetic flux density remarkably falls, so excellent core ross cannot be obtained. For this reason, the groove depth D may be made 10 $\mu$m or more and 40 $\mu$m or less. The lower limit of the groove depth D is preferably 11 $\mu$m, 12 $\mu$m, 13 $\mu$m, 14 $\mu$m, or 15 $\mu$m. The upper limit of the groove depth D is preferably 38 $\mu$m, 36 $\mu$m, 34 $\mu$m, 32 $\mu$m, 30 $\mu$m, 28 $\mu$m, or 26 $\mu$m.

<Pitch P of Groove>

The groove pitch P is the pitch of center lines of the grooves in the longitudinal direction between adjoining grooves arranged substantially in parallel at the steel sheet surface and indicates a distance in the rolling direction at the base steel sheet. The "center line of a groove" is a line parallel with the longitudinal direction of a groove running through the center point of the groove at the imaginary surface at the groove cross-section.

If the groove pitch P is too narrow, the effect of control of magnetic domains becomes saturated and only the magnetic flux density remarkably falls, so excellent core ross cannot be obtained, so the pitch may be made 1 mm or more. On the other hand, if the pitch is too broad of over 30 mm, the effect of control of magnetic domains is not sufficiently obtained and excellent core ross cannot be obtained. For this reason, the groove pitch P may be 1 mm or more and 30 mm or less. The groove pitch P need not be an equal pitch, but the groove pitch P with the adjoining groove may be within that range. The lower limit of the groove pitch P is preferably 1.2 mm, 1.4 mm, 1.5 mm, 1.6 mm, 1.8 mm, or 2.0 mm. The upper limit of the groove pitch P is preferably 25.0 mm, 20.0 mm, 15.0 mm, 10.0 mm, 7.0 mm, or 5.0 mm.

<Method of Production>

First, a known method is used to produce cold steel sheet for the present electrical steel sheet. The steel sheet constituents and the method of production of the cold rolled steel sheet are not particularly limited. A known method, for example, the steel sheet constituents and method of production of steel sheet described in PTLs 4 or 5, can be employed.

A known method is used to decarburize and nitride the cold rolled steel sheet, then the sheet is coated with an annealing separator and heated, held, then cooled. To enhance the effect of control of magnetic domains, it is also possible to form a tension coating (insulating coating) on the steel sheet.

As the decarburization conditions, known conditions can be employed. For example, it is preferable to raise the sheet in temperature to 850°C, then hold it there for 60 seconds, then cool it. The decarburization atmosphere is preferably a hydrogen-inert gas atmosphere with a $P_{H_2O}/P_{H_2}$ made 0.15 to 0.80 in range. Good properties are obtained in particular at 0.30 to 0.60 in range.

For the nitriding as well, a known method can be employed. The amount of nitriding can, for example, be made 50 to 400 ppm in range. Good properties are obtained in particular at 180 to 250 ppm in range.

For the composition of the annealing separator as well, a known one can be employed. If forming a glass coating on the steel sheet surface, for example, the composition may be made MgO: 100 parts by mass, $TiO_2$: 5 parts by mass, and an additive of, for example, $FeCl_2$ added to give 200 ppm by chlorine. Further, if not forming a glass coating at the steel sheet surface, for example, an annealing separator mainly comprised of alumina ($Al_2O_3$) is used.

The glass coating is formed by the process of winding up the steel sheet coated with the annealing separator in a coil shape, holding it at 1150 to 1250°C for 10 to 30 hours, then cooling it. For the composition of the annealing separator, a known one can be employed. For example, it is possible to make it MgO: 100 parts by mass, $TiO_2$: 5 parts by mass, and an additive of, for example, $FeCl_2$, added to give 200 ppm by chlorine.

After that, an insulating coating is applied and baked on. The type of the insulating coating is not particularly limited. All sorts of conventionally known insulating coatings can be applied to the present grain-oriented electrical steel sheet.

As an example of an insulating coating, a coating formed by coating a water-based coating solution containing a phosphate and colloidal silica can be mentioned. In this case, as the phosphate, for example, a phosphate of Ca, Al, Sr, etc. can be mentioned. Among these as well, an aluminum phosphate salt is more preferable. An insulating coating coating solution may be suitably coated on the steel sheet surface by a roll coater or other wet type coating method and baked on in the air atmosphere at 800 to 900°C in temperature for 10 to 60 seconds to form a tension insulating coating. Furthermore, the solution may be recoated and then baked on.

The lasering is performed on the steel sheet after cold rolling, after decarburization annealing, after decarburization and nitriding annealing, or after finish annealing and further on steel sheet given a tension coating. It is sufficient to make it easier for projecting parts formed by lasering to remain until the steel sheet after the final step. For example, if lasering steel sheet after cold rolling, the lasering is preferably performed after removing the cold rolling oil. This is because by removing the extraneous oil, the laser energy becomes easier to transmit to the steel sheet and because if there is an oil coating between the steel sheet surface and spatter, the spatter becomes easily peeled off. If lasering steel sheet after decarburization annealing, the lasering is preferably performed before coating the annealing separator. If lasering after cold rolling, in the decarburization annealing or, if lasering after decarburization annealing, in the finish annealing, recrystallized grains will form inside the projections and orientations remain different by 5° or more from the base material Goss orientation without being consumed by the Goss orientation of the base material due to the secondary recrystallization. If lasering steel sheet after finish annealing, the lasering may also be performed before coating the insulating coating. If lasering steel sheet after finish annealing or steel sheet given a tension coating, in the following coating baking or recoat baking, inside the projections, recrystallized grains different by 5° or more from the orientation of the base steel sheet made the Goss orientation due to secondary recrystallization will be formed.

<Groove Forming Step: Lasering Conditions>

Next, the steel sheet after cold rolling, after decarburization annealing, after decarburization and nitriding annealing, or after finish annealing or the steel sheet further given a tension coating is lasered to thereby form a plurality of grooves on the steel sheet surface in a direction crossing the rolling direction so that the groove width W, the groove depth D, and a predetermined pitch (groove pitch P) become prescribed ranges (groove forming step). Among the lasering conditions, the type of the laser source, laser output, laser scan speed, and speed of movement of the steel sheet at the time of lasering are not particularly limited, but it is sufficient to suitably select not only the groove width W, groove depth D, predetermined pitch of the grooves (groove pitch P), but also the conditions whereby projecting parts and the fine crystal grains in them become prescribed ranges. The apparatuses, atmosphere, any coatings, and other conditions differ, so, for example, it is sufficient to perform lasering in advance on a test basis and derive suitable conditions.

[Laser Source]

As the laser source, for example, a fiber laser, YAG laser, semiconductor laser, $CO_2$ laser, or other high output laser generally industrially used can be used. If it is possible to stably form the grooves, a pulse laser or a continuous wave laser can be also used.

[Laser Output]

If the laser output is too small, the laser scan speed for forming the desired grooves remarkably falls and industrial productivity falls, so the output may be 200W or more. Preferably, it is 1000W or more, more preferably 1500W or more. Further, if the laser output is too large, the power capacity becomes large and the capital costs become enormous, so this is not practical industrially, therefore the output may be made 3000W or less. Preferably, it is 2800W or less, more preferably 2500W or less.

[Laser Scan Speed]

If the laser scan speed is too slow, it is necessary to slow the running speed of the steel sheet and the productivity falls, so the speed is made 5 m/s or more. Preferably it may be 20 m/s or more, more preferably 40 m/s or more. Further, if the laser scan speed is too fast, that much higher an output becomes necessary and the capital costs increase, so the speed may be made 100 m/s or less. Preferably it may be 80 m/s or less, more preferably 60 m/s or less.

[Shape of Focused Spot of Laser Beam]

The shape of the focused spot of the laser beam can be made circular or oval somewhat broader in the rolling direction at the base steel sheet surface so as to efficiently form projecting parts at the steel sheet surface. As the condition for firing the laser beam, for example, it is sufficient to make the focused spot diameter dL of the laser beam in the rolling direction 5 to 100 $\mu$m, make the focused spot diameter dC of the laser beam in the sheet width direction 5 to 100 $\mu$m, make the laser output 200 to 3000W, make the laser scan speed V 5 to 100 m/s, and satisfy formula (1):

$$dL/dC \geq 1.0 \dots \text{ formula (1)}$$

If dL/dC is larger than 1.0, the laser spot becomes a long oval in the rolling direction and sputtered projections are formed. Even if dL/dC is less than 1.0, projections are formed, but part of the melt spatter deposits inside the grooves and the heights of the projections become lower. The lower limit of dL/dC is preferably 1.1, 1.2, 1.3, 1.5, 1.7, or 2.0. The upper limit of dL/dC is not particularly limited, but if dL/dC is too large, the groove width becomes broader and the effect of control of magnetic domains by the grooves cannot be enjoyed, so the ratio is preferably 30.0, 25.0, 20.0, 18.0, 15.0, or 10.0.

If dL and dC satisfy a prescribed relationship, the focused spot diameter is not particularly limited, but the focused spot diameter may be selected from the relationship with other properties of the electrical steel sheet so that the groove width becomes less than 300 $\mu$m. For example, the upper limit of dC may be 300 $\mu$m, preferably is 280 $\mu$m, 250 $\mu$m, 200 $\mu$m, 150 $\mu$m, or 100 $\mu$m.

[Assist Gas]

At the same time as firing the laser beam, assist gas is sprayed at portions of the steel sheet where the laser beam is fired. The assist gas performs the role of removing the constituents melting or vaporizing from the steel sheet due to the lasering. By spraying the assist gas, the laser beam stably reaches the steel sheet, so the grooves are stably formed. The flow rate of the assist gas is, for example, preferably made 10 to 1000 liters per minute.

Further, the assist gas is preferably air or an inert gas.

[Elimination of Projecting Part Removing Step]

The present electrical steel sheet can be improved in core ross by having fine crystal grains in the projecting parts, so the projecting part removing step is eliminated. That is, there is no problem like in the prior art of the projecting part removing step after the formation of laser grooves, so the productivity will not fall by that amount.

EXAMPLES

Next, examples of the present invention will be explained, but the conditions of the examples are just an illustration of the conditions employed for confirming the workability and effects of the present invention. The present invention is not limited to this illustration of conditions. The present invention can employ various conditions so long as not departing from the present invention and achieving the object of the present invention.

<Example 1>

A slab containing Si: 3.3 mass%, Mn: 0.10 mass%, S: 0.006 mass%, C: 0.060 mass%, acid soluble Al: 0.027 mass%, and N: 0.008 mass% and having a balance of Fe and impurities was used as a material for hot rolling, then annealing by a known method and then was cold rolled to obtain steel sheets A1 to A12 and a1 to a12 having a 0.22 mm final sheet thickness.

After that, A1 to A3 and a1 to a3 were lasered at the surfaces of the steel sheets to form a plurality of grooves extending in a direction crossing the rolling direction at 3 mm pitch in the rolling direction. The groove forming direction was made a direction slanted by 10° in the L-direction (rolling direction) from the C-direction (sheet with direction) of the steel sheets. The output of the laser beam was controlled to 1500 to 2000W so that the groove depth became 25 $\mu$m. The groove width became 40 to 220 $\mu$m in range.

The focused spot diameter dL of the laser beam in the rolling direction was adjusted to 25 to 120 $\mu$m and the focused spot diameter dC of the laser beam in the sheet width direction was adjusted to 25 to 140 $\mu$m in range. The laser scan speed was made 45 m/s. At the time of lasering, assist gas of air was sprayed by 100 liters/min for efficiently removing the metal of the steel sheet melting and evaporating due to the laser.

After cold rolling, the steel sheets A1 to A3 and a1 to a3 formed with grooves by lasering (cold rolled sheets) and the steel sheets A4 to A12 and a4 to a12 with no grooves were decarburized and further nitrided. The decarburization conditions were raising the temperature to 850°C, then holding at 60 seconds and cooling. The decarburization atmosphere was a hydrogen-nitrogen atmosphere while the partial pressure ratio $PH_2 O/PH_2$ of the steam and hydrogen was made 0.33. Further, the amount of nitriding was made 200 ppm.

Steel sheets A4 to A6 and a4 to a6 formed with grooves by lasering after the decarburization and nitriding (decarburized and nitrided sheet) were lasered under the same conditions as explained above to form grooves of the same shapes.

After that, the steel sheets A1 to A12 and a1 to a12 were coated by an annealing separator mainly comprised of MgO to give a coated amount of 4 g/m$^2$ per surface. The composition of the annealing separator was MgO: 100 parts by mass, $TiO_2$: 5 parts by mass plus $FeCl_2$ : 200 ppm by chlorine.

After that, the steel sheets were wound up into coil shapes, held at the maximum temperature of 1200°C for 20 hours, then cooled to form glass coatings on their surfaces.

The steel sheets (glass sheets) A7 to A9 and a7 to a9 lasered on their surfaces after the glass coatings were lasered under the same conditions as explained above to form grooves of the same shapes.

After that, furthermore, the steel sheets A1 to A12 and a1 to a12 were formed with tension coatings having aluminum phosphate as their main constituents to thicknesses of 1 $\mu$m. The tension at that time was made 12 MPa with respect to the rolling direction, including the glass coating.

The steel sheets (tension coating sheets) A10 to A12 and a10 to a12 formed with grooves by lasering after the tension coating were lasered under the same conditions as explained above to form the grooves.

After that, A10 to A12 and a10 to a12 were reformed so that the tension coating comprised mainly of aluminum phosphate became a thickness of 1 $\mu$m.

A1 to A12 and a1 to a12 were measured for core ross $W_{17/50}$ (energy loss measured under excitation conditions of 1.7T, 50Hz). The results are shown in Table 1.

In Invention Examples A1 to A12 and Comparative Examples a1 to a12, the conditions of the groove angle, groove depth, and groove pitch affecting the core ross were all the same. The magnetic flux densities were the same extents in all cases, while the core rosses in Invention Examples 1 to 12 were good ones of less than 0.750W/kg. In Comparative Examples a1 to a12, they were inferior at 0.750W/kg or more. Invention Examples A1 to A12 had fine crystal grains present in the projecting parts from cross-sectional EBSD examination. The crystal orientations differed by 5° or more from the base Goss orientation. Note that, if there are two or more fine crystal grains in the projecting parts, the differential angle of the one with an angular difference from the base Goss orientation was described.

Note that, regarding the shapes of the projecting parts and the properties of the fine crystal grains in the projecting parts, any three grooves in the steel sheets were selected. At the cross-section of one location arbitrarily selected for each groove, the methods explained above were used for measurement. The measured values were arithmetically averaged to find the shapes and properties.

<Example 2>

A slab containing Si: 3.3 mass%, Mn: 0.10 mass%, S: 0.006 mass%, C: 0.060 mass%, acid soluble Al: 0.027 mass%, and N: 0.008 mass% and having a balance of Fe and impurities was used as a material for hot rolling, then annealing by a known method and then was cold rolled to obtain steel sheets B1 to B12 having a 0.22 mm final sheet thickness.

After that, regarding the steel sheets B1 to B3, a laser was fired at the surface of each steel sheet to form a plurality of grooves extending in a direction crossing the rolling direction along the rolling direction at a 5 mm pitch. The groove forming direction was made a direction slanted by 5° in the L-direction with respect to the C-direction of the steel sheets. The output of the laser beam was controlled to 1800 to 2300W in range so that the groove depth became 30 $\mu$m. The groove width was made 35 to 50 $\mu$m.

The focused spot diameter of the laser beam in the rolling direction was adjusted to 90 to 100 $\mu$m and the focused spot diameter of the laser beam in the sheet width direction was adjusted to 5 to 10 $\mu$m in range. The laser scan speed was made 60 m/s. At the time of lasering, assist gas of air was sprayed by 100 liters/min for efficiently removing the metal of the steel sheet melting and evaporating due to the laser.

After cold rolling, the steel sheets B1 to B3 formed with grooves by lasering after cold rolling and the cold rolled steel sheets B4 to B12 with no grooves were decarburized and further were nitrided. The decarburization conditions were raising the temperature to 850°C, then holding at 60 seconds and cooling. The decarburization atmosphere was a hydrogen-nitrogen atmosphere with a $PH_2 O/PH_2$ made 0.33. Further, the amount of nitriding was made 200 ppm.

The decarburized and nitrided steel sheets B4 to B6 were lasered under the same conditions as explained above to form grooves of the same shapes.

After that, B1 to B12 were coated by an annealing separator mainly comprised of MgO to give a coated amount of 4 g/m² per surface. The composition of the annealing separator was MgO: 100 parts by mass, $TiO_2$: 5 parts by mass plus $FeCl_2$ : 200 ppm by chlorine.

After that, the steel sheets were wound up into coil shapes, held at the maximum temperature of 1200°C for 20 hours, then cooled to form glass coatings on their surfaces and obtain glass sheets.

The glass sheets B7 to B9 were lasered under the same conditions as explained above to form grooves of the same shapes.

After that, furthermore, B1 to B12 were formed with tension coatings having aluminum phosphate as their main constituents to thicknesses of 1 $\mu$m to obtain a tension coating sheet. The tension at that time was made 12 MPa with respect to the rolling direction, including the glass coating.

The tension coating sheets B10 to B12 were lasered under the same conditions as explained above to form grooves of the same shapes.

After that, B10 to B12 were re-formed so that the tension coating mainly comprised of aluminum phosphate became a thickness of 1 $\mu$m.

B1 to B12 were measured for core ross $W_{17/50}$ (energy loss measured under excitation conditions of 1.7T, 50Hz). The results are shown in Table 2.

In Invention Examples B1 to B12, the core ross was a further good one of less than 0.730W/kg. The groove heights of the projecting parts in 3D microscope observation were all 4 $\mu$m or more and 10 $\mu$m or less.

<Example 3>

A slab containing Si: 3.3 mass%, Mn: 0.10 mass%, S: 0.006 mass%, C: 0.060 mass%, acid soluble Al: 0.027 mass%, and N: 0.008 mass% and having a balance of Fe and impurities was used as a material for hot rolling, then annealing by a known method and then was cold rolled to obtain steel sheets C1 to C8 having a 0.22 mm final sheet thickness.

After that, a laser was fired at the surface of each steel sheet to form a plurality of grooves extending in a direction intersecting the rolling direction along the rolling direction at a 1 to 25 mm pitch. The groove forming direction was made a direction slanted by 0 to 40° in the L-direction with respect to the C-direction of the steel sheets. The groove depth was made 11 to 35 $\mu$m and the groove width was made 20 to 290 $\mu$m.

The firing conditions of the laser beam were controlled so that the laser output became 1500 to 2500W, the focused spot diameter of the laser beam in the rolling direction was 100 to 300 $\mu$m, and the focused spot diameter of the laser beam in the sheet width direction was 10 to 250 $\mu$m in range. The laser scan speed was made 60 m/s. At the time of lasering, assist gas of air was sprayed by 100 liters/min for efficiently removing the metal of the steel sheet melting and evaporating due to the laser.

The cold rolled steel sheets formed with grooves were decarburized and further were nitrided. The decarburization conditions were raising the temperature to 850°C, then holding at 60 seconds and cooling. The decarburization atmosphere was a hydrogen-nitrogen atmosphere with a $PH_2O/PH_2$ made 0.33. Further, the amount of nitriding was made 200 ppm.

After that, the samples were coated by an annealing separator mainly comprised of MgO to give a coated amount of 4 g/$m^2$ per surface. The composition of the annealing separator was MgO: 100 parts by mass, $TiO_2$: 5 parts by mass plus $FeCl_2$ : 200 ppm by chlorine.

After that, the steel sheets were wound up into coil shapes, held at the maximum temperature of 1200°C for 20 hours, then cooled to form glass coatings on their surfaces and obtain glass sheets.

After that, tension coatings having aluminum phosphate as their main constituents were formed to thicknesses of 1 $\mu$m to obtain tension coating sheets. The tension at that time was made 12 MPa with respect to the rolling direction, including the glass coatings.

C1 to C8 were measured for core ross $W_{17/50}$ (energy loss measured under excitation conditions of 1.7T, 50Hz). The results are shown in Table 3.

In Invention Examples C1 to C8, the core ross was a good one of less than 0.750W/kg, the absolute value of the angle $\theta$ formed with the longitudinal direction of the grooves was 0 to 40°, the width W of the grooves was 20 to 300 $\mu$m, the depth D of the grooves was 10 to 40 $\mu$m, and the pitch P of the grooves in the rolling direction was 1 to 30 mm.

<Example 4>

At some of the samples prepared in Examples 1 to 3, the frequency of presence of fine crystal grains and the aspect ratio of the fine crystal grains were measured. The results are shown in Table 4. If the frequency of presence of fine grains per one projecting part is 0.05 or more and 10 or less and the aspect ratio of the fine grains at the projecting parts is 0.2 or more and 5 or less in range, it was confirmed that the magnetic properties were excellent.

[Table 1]

| No. | Projecting parts of groove side parts | | | Grooves | | | | Evaluation of properties | | Lasering conditions | | | | | | Remarks |
| | Fine crystal grains | | Average height (μm) | Angle θ (°) | Width W (μm) | Depth D (μm) | Pitch P (mm) | Magnetic properties (steel sheet) | | Laser beam focused spot diameter | | | | | | |
| | Yes/ No | Difference in crystal orientation from base steel sheet (°) | | | | | | Magnetic flux density B8 (T) | Core ross W17/50 (W/kg) | Focused size in sheet length direction: dL (μm) | Focused size in sheet width direction; dC (μm) | Focused size ratio dL/dC | Output (W) | Scan speed (m/s) | Lasered steel sheet | |
| A1 | Yes | 12 | 3.5 | 10 | 40 | 25 | 3 | 1.889 | 0.740 | 70 | 25 | 2.8 | 1800 | 45 | Cold rolled sheet | Ex. |
| A2 | Yes | 34 | 3.8 | 10 | 70 | 25 | 3 | 1.889 | 0.739 | 80 | 50 | 1.6 | 2000 | 45 | Cold rolled sheet | Ex. |
| A3 | Yes | 21 | 2.8 | 10 | 50 | 25 | 3 | 1.886 | 0.741 | 60 | 30 | 2.0 | 1500 | 45 | Cold rolled sheet | Ex. |
| A4 | Yes | 43 | 3.2 | 10 | 40 | 25 | 3 | 1.887 | 0.742 | 70 | 25 | 2.8 | 1800 | 45 | Decarburized nitrided sheet | Ex. |
| A5 | Yes | 46 | 3.5 | 10 | 70 | 25 | 3 | 1.888 | 0.741 | 80 | 50 | 1.6 | 2000 | 45 | Decarburized nitrided sheet | Ex. |
| A6 | Yes | 34 | 3.8 | 10 | 50 | 25 | 3 | 1.889 | 0.740 | 60 | 30 | 2.0 | 1500 | 45 | Decarburized nitrided sheet | Ex. |
| A7 | Yes | 22 | 3.9 | 10 | 40 | 25 | 3 | 1.886 | 0.739 | 70 | 25 | 2.8 | 1800 | 45 | Glass sheet | Ex. |
| A8 | Yes | 32 | 3.7 | 10 | 70 | 25 | 3 | 1.884 | 0.738 | 80 | 50 | 1.6 | 2000 | 45 | Glass sheet | Ex. |
| A9 | Yes | 19 | 3.6 | 10 | 50 | 25 | 3 | 1.887 | 0.742 | 60 | 30 | 2.0 | 1500 | 45 | Glass sheet | Ex. |
| A10 | Yes | 17 | 3.3 | 10 | 40 | 25 | 3 | 1.886 | 0.739 | 70 | 25 | 2.8 | 1800 | 45 | Tension coating sheet | Ex. |
| A11 | Yes | 29 | 3.2 | 10 | 70 | 25 | 3 | 1.886 | 0.729 | 80 | 50 | 1.6 | 2000 | 45 | Tension coating sheet | Ex. |
| A12 | Yes | 9 | 2.5 | 10 | 50 | 25 | 3 | 1.886 | 0.741 | 60 | 30 | 2.0 | 1500 | 45 | Tension coating sheet | Ex. |
| a1 | No | - | 1.2 | 10 | 80 | 25 | 3 | 1.889 | 0.755 | 25 | 70 | 0.4 | 1800 | 45 | Cold rolled sheet | Comp. ex. |
| a2 | No | - | 1.3 | 10 | 100 | 25 | 3 | 1.888 | 0.753 | 50 | 80 | 0.6 | 2000 | 45 | Cold rolled sheet | Comp. ex. |
| a3 | Yes | 1 | 3.4 | 10 | 220 | 25 | 3 | 1.887 | 0.762 | 120 | 140 | 0.9 | 1500 | 45 | Cold rolled sheet | Comp. ex. |
| a4 | No | - | 1.5 | 10 | 80 | 25 | 3 | 1.886 | 0.758 | 25 | 70 | 0.4 | 1800 | 45 | Decarburized nitrided sheet | Comp. ex. |
| a5 | No | - | 2.4 | 10 | 100 | 25 | 3 | 1.886 | 0.754 | 50 | 80 | 0.6 | 2000 | 45 | Decarburized ni-trided sheet | Comp. ex. |

(continued)

| No. | Projecting parts of groove side parts | | | Grooves | | | | Evaluation of properties | | Lasering conditions | | | | | | Remarks |
| | Fine crystal grains | | | | | | | Magnetic properties (steel sheet) | | Laser beam focused spot diameter | | | | | | |
| | Yes/ No | Difference in crystal orientation from base steel sheet (°) | Average height (μm) | Angle θ (°) | Width W (μm) | Depth D (μm) | Pitch P (mm) | Magnetic flux density B8 (T) | Core ross W17/50 (W/kg) | Focused size in sheet length direction: dL (μm) | Focused size in sheet width direction; dC (μm) | Focused size ratio dL/dC | Output (W) | Scan speed (m/s) | Lasered steel sheet | |
| a6 | Yes | 2 | 3.8 | 10 | 220 | 25 | 3 | 1.886 | 0.755 | 120 | 140 | 0.9 | 1500 | 45 | Decarburized nitrided sheet | Comp. ex. |
| a7 | No | - | 2.8 | 10 | 80 | 25 | 3 | 1.888 | 0.753 | 25 | 70 | 0.4 | 1800 | 45 | Glass sheet | Comp. ex. |
| a8 | No | - | 3.2 | 10 | 100 | 25 | 3 | 1.886 | 0.754 | 50 | 80 | 0.6 | 2000 | 45 | Glass sheet | Comp. ex. |
| a9 | Yes | 4 | 3.6 | 10 | 220 | 25 | 3 | 1.886 | 0.758 | 120 | 140 | 0.9 | 1500 | 45 | Glass sheet | Comp. ex. |
| a10 | No | - | 1.3 | 10 | 80 | 25 | 3 | 1.889 | 0.755 | 25 | 70 | 0.4 | 1800 | 45 | Tension coating sheet | Comp. ex. |
| a11 | No | - | 2.7 | 10 | 100 | 25 | 3 | 1.888 | 0.753 | 50 | 80 | 0.6 | 2000 | 45 | Tension coating sheet | Comp. ex. |
| a12 | Yes | 2 | 3.9 | 10 | 220 | 25 | 3 | 1.889 | 0.757 | 120 | 140 | 0.9 | 1500 | 45 | Tension coating sheet | Comp. ex. |

EP 4 600 384 A1

[Table 2]

| No. | Projecting parts of groove side parts | | | Grooves | | | | Evaluation of properties | | Lasering conditions | | | | | | | Remarks |
| | Fine crystal grains | | | | | | | Magnetic properties (steel sheet) | | Laser beam focused spot diameter | | | | | | | |
| | Yes/No | Difference in crystal orientation from base steel sheet (°) | Average height (μm) | Angle θ (°) | Width W (μm) | Depth D (μm) | Pitch P (mm) | Magnetic flux density B8 (T) | Core ross W17/50 (W/kg) | Focused size in sheet length direction: dL (μm) | Focused size in sheet width direction; dC (μm) | Focused size ratio dL/dC | Output (W) | Scan speed (m/s) | Lasered steel sheet | |
|---|---|---|---|---|---|---|---|---|---|---|---|---|---|---|---|---|
| B1 | Yes | 12 | 7.5 | 5 | 50 | 30 | 5 | 1.890 | 0.718 | 100 | 10 | 10.0 | 2300 | 60 | Cold rolled sheet | Ex. |
| B2 | Yes | 21 | 6.8 | 5 | 35 | 30 | 5 | 1.887 | 0.721 | 100 | 5 | 20.0 | 2000 | 60 | Cold rolled sheet | Ex. |
| B3 | Yes | 43 | 5.4 | 5 | 40 | 30 | 5 | 1.886 | 0.722 | 90 | 5 | 18.0 | 1800 | 60 | Cold rolled sheet | Ex. |
| B4 | Yes | 44 | 7.2 | 5 | 50 | 30 | 5 | 1.888 | 0.718 | 100 | 10 | 10.0 | 2300 | 60 | Decarburized nitrided sheet | Ex. |
| B5 | Yes | 37 | 6.1 | 5 | 35 | 30 | 5 | 1.888 | 0.722 | 100 | 5 | 20.0 | 2000 | 60 | Decarburized nitrided sheet | Ex. |
| B6 | Yes | 39 | 4.8 | 5 | 40 | 30 | 5 | 1.891 | 0.723 | 90 | 5 | 18.0 | 1800 | 60 | Decarburized nitrided sheet | Ex. |
| B7 | Yes | 28 | 8.1 | 5 | 50 | 30 | 5 | 1.894 | 0.718 | 100 | 10 | 10.0 | 2300 | 60 | Glass sheet | Ex. |
| B8 | Yes | 27 | 7.1 | 5 | 35 | 30 | 5 | 1.896 | 0.722 | 100 | 5 | 20.0 | 2000 | 60 | Glass sheet | Ex. |
| B9 | Yes | 24 | 4.4 | 5 | 40 | 30 | 5 | 1.886 | 0.719 | 90 | 5 | 18.0 | 1800 | 60 | Glass sheet | Ex. |
| B10 | Yes | 12 | 8.2 | 5 | 50 | 30 | 5 | 1.886 | 0.711 | 100 | 10 | 10.0 | 2300 | 60 | Tension coating sheet | Ex. |
| B11 | Yes | 9 | 6.5 | 5 | 35 | 30 | 5 | 1.891 | 0.715 | 100 | 5 | 20.0 | 2000 | 60 | Tension coating sheet | Ex. |
| B12 | Yes | 8 | 4.9 | 5 | 40 | 30 | 5 | 1.886 | 0.714 | 90 | 5 | 18.0 | 1800 | 60 | Tension coating sheet | Ex. |

[Table 3]

| sNo. | Projecting parts of groove side parts | | | Grooves | | | | Evaluation of properties | | Lasering conditions | | | | | | | Remarks |
|---|---|---|---|---|---|---|---|---|---|---|---|---|---|---|---|---|---|
| | Fine crystal grains | | | | | | | Magnetic properties (steel sheet) | | Laser beam focused spot diameter | | | | | | | |
| | Yes/No | Difference in crystal orientation from base steel sheet (°) | Average height (μm) | Angle θ (°) | Width W (μm) | Depth D (μm) | Pitch P (mm) | Magnetic flux density B8 (T) | Core ross W17/50 (W/kg) | Focused size in sheet length direction: dL (μm) | Focused size in sheet width direction; dC (μm) | Focused size ratio dL/dC | Output (W) | Scan speed (m/s) | Lasered steel sheet | |
| C1 | Yes | 12 | 4.4 | 0 | 40 | 20 | 3.0 | 1.886 | 0.739 | 100 | 10 | 10.0 | 2200 | 60 | Cold rolled sheet | Ex. |
| C2 | Yes | 15 | 6.2 | 40 | 40 | 30 | 3.0 | 1.887 | 0.742 | 100 | 10 | 10.0 | 2000 | 60 | Cold rolled sheet | Ex. |
| C3 | Yes | 21 | 7.5 | 5 | 20 | 25 | 5.0 | 1.886 | 0.739 | 100 | 10 | 10.0 | 2300 | 60 | Cold rolled sheet | Ex. |
| C4 | Yes | 25 | 5.8 | 10 | 290 | 30 | 5.0 | 1.889 | 0.740 | 300 | 250 | 1.2 | 2100 | 60 | Cold rolled sheet | Ex. |
| C5 | Yes | 22 | 9.2 | 5 | 40 | 11 | 3.0 | 1.886 | 0.733 | 100 | 25 | 4.0 | 1500 | 60 | Cold rolled sheet | Ex. |
| C6 | Yes | 25 | 10.4 | 5 | 40 | 35 | 5.0 | 1.886 | 0.739 | 100 | 10 | 10.0 | 2500 | 60 | Cold rolled sheet | Ex. |
| C7 | Yes | 43 | 8.5 | 10 | 50 | 20 | 1.0 | 1.887 | 0.742 | 100 | 10 | 10.0 | 2500 | 60 | Cold rolled sheet | Ex. |
| C8 | Yes | 9 | 5.9 | 3 | 50 | 15 | 25.0 | 1.886 | 0.737 | 100 | 10 | 10.0 | 1500 | 60 | Cold rolled sheet | Ex. |

EP 4 600 384 A1

15

[INDUSTRIAL APPLICABILITY]

The present invention can be utilized for industrial equipment using grain-oriented electrical steel sheet such as wound cores for transformers.

REFERENCE SIGNS LIST

1. steel sheet (base steel sheet)
2. groove
3. projecting part
4. imaginary surface line
5. fine crystal grain
$\Theta$. groove angle
W. groove width
D. groove depth
d. groove pitch

**Claims**

1. A grain-oriented electrical steel sheet having a plurality of grooves on a surface, which grain-oriented electrical steel sheet having projecting parts at groove side parts adjoining the grooves at the surface of the steel sheet, the crystal orientation of at least one crystal grain present inside the projecting parts different by 5° or more from the crystal orientations of crystal grains present at parts other than the projecting parts of the steel sheet.

2. The grain-oriented electrical steel sheet according to claim 1, wherein an average height of the projecting parts is 2.5 $\mu$m or more and 10.0 $\mu$m or less.

3. The grain-oriented electrical steel sheet according to claim 1 or 2, wherein in the grain-oriented electrical steel sheet, an angle $\theta$ formed by a direction perpendicular to a rolling direction and sheet thickness direction and a longitudinal direction of the grooves is 40° or less, a width W of the grooves is 20 $\mu$m or more and 300 $\mu$m or less, a depth D of the grooves is 10 $\mu$m or more and 40 $\mu$m or less, and a pitch P of the grooves in the rolling direction is 1 mm or more and 30 mm or less.

4. A method of production of the grain-oriented electrical steel sheet according to claim 1 or 2, the method of production of the grain-oriented electrical steel sheet including a groove forming step of lasering a surface of the steel sheet to form grooves, as a condition of lasering, a focused spot diameter dL of the laser beam in the rolling direction and a focused spot diameter dC in a sheet width direction satisfying formula (1):

$$1.0 \leq dL/dC \ldots \text{formula (1)}$$

# Fig. 1

# Fig. 2

# Fig. 3

# Fig. 4

## INTERNATIONAL SEARCH REPORT

| International application No. |
| --- |
| **PCT/JP2023/036261** |

| A. | CLASSIFICATION OF SUBJECT MATTER |
| --- | --- |

*C21D 8/12*(2006.01)i; *C22C 38/00*(2006.01)i; *C22C 38/06*(2006.01)i; *B23K 26/364*(2014.01)i; *H01F 1/147*(2006.01)i
FI: C21D8/12 D; C22C38/00 303U; B23K26/364; H01F1/147 183; C22C38/06

According to International Patent Classification (IPC) or to both national classification and IPC

| B. | FIELDS SEARCHED |
| --- | --- |

Minimum documentation searched (classification system followed by classification symbols)

C21D8/12; C22C38/00; C22C38/06; B23K26/364; H01F1/147

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2019/156220 A1 (NIPPON STEEL CORP.) 15 August 2019 (2019-08-15) entire text, all drawings | 1-4 |
| A | WO 2017/017908 A1 (JFE STEEL CORP.) 02 February 2017 (2017-02-02) entire text, all drawings | 1-4 |
| A | JP 2020-514548 A (BAOSHAN IRON & STEEL CO., LTD.) 21 May 2020 (2020-05-21) entire text, all drawings | 1-4 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 November 2023** | **05 December 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/036261**

| Patent document cited in search report | | | Publication date (day/month/year) | Patent family member(s) | | | Publication date (day/month/year) |
|---|---|---|---|---|---|---|---|
| WO | 2019/156220 | A1 | 15 August 2019 | US | 2021/0074456 | A1 | |
| | | | | entire text, all drawings | | | |
| | | | | EP | 3751014 | A1 | |
| | | | | KR | 10-2020-0103100 | A | |
| | | | | CN | 111684087 | A | |
| WO | 2017/017908 | A1 | 02 February 2017 | US | 2018/0147663 | A1 | |
| | | | | entire text, all drawings | | | |
| | | | | EP | 3330388 | A1 | |
| | | | | KR | 10-2018-0019211 | A | |
| | | | | CN | 107849631 | A | |
| JP | 2020-514548 | A | 21 May 2020 | US | 2020/0058434 | A1 | |
| | | | | entire text, all drawings | | | |
| | | | | WO | 2018/177007 | A1 | |
| | | | | EP | 3604565 | A1 | |
| | | | | CN | 108660303 | A | |
| | | | | KR | 10-2019-0137097 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62054873 B
- JP 62053579 B
- JP 2003129135 A
- WO 2011007771 A
- WO 2017171013 A